# FASCICULE DE BREVET EUROPEEN

(11) **EP 2 718 584 B1**
(45) Date de publication et mention de la délivrance du brevet: **14.09.2016**
(21) Numéro de dépôt: 12728701.9
(22) Date de dépôt: 15.05.2012
(51) Int. Cl.: F16F 1/373

(54) **PLOT EN MATIERE SOUPLE DESTINE A ETRE FIXE DANS UNE OUVERTURE REALISEE DANS UNE PIECE RIGIDE**
KONTAKTPAD AUS FLEXIBLEM MATERIAL ZUR ANBRINGUNG IN EINER ÖFFNUNG BEI EINEM STARREN TEIL
CONTACT PAD WHICH IS MADE OF A FLEXIBLE MATERIAL AND WHICH IS TO BE ATTACHED INTO AN OPENING PROVIDED IN A RIGID PART

(30) Priorité: 09.06.2011 FR 1155023
(43) Date de publication de la demande: 16.04.2014
(73) Titulaire: PSA Peugeot Citroën Automobiles S.A., 78140 Velizy Villacoublay (FR)
(72) Inventeur: VAILLANT, Pierre Jean, F-90800 Urcerey (FR); ANDREI, Gabriel, F-25600 Sochaux (BP A1-4) (FR)
(74) Mandataire: Fosse, Danièle
(86) Numéro de dépôt international: PCT/FR2012/051093
(87) Numéro de publication internationale: WO 2012/168609

(56) Documents cités:
- FR-A- 1 220 181
- JP-A- 2002 349 524

## Description

La présente invention concerne un plot en matière souple, telle que du caoutchouc, destiné à être fixé dans une ouverture réalisée dans une pièce rigide, notamment en métal.

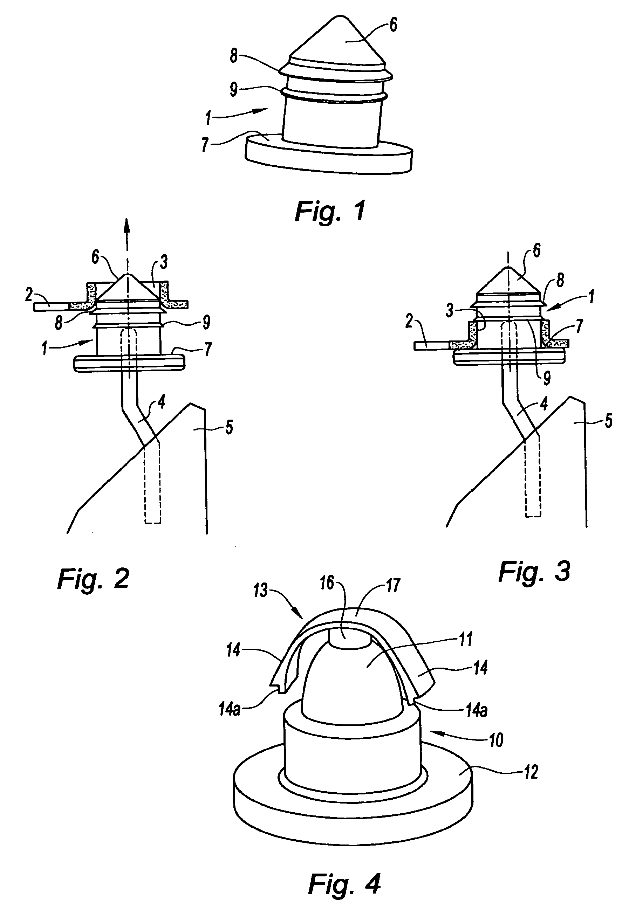

Un tel plot en caoutchouc 1 est représenté en perspective sur la figure 1.

Les figures 2 et 3 représentent une pièce en métal 2 comportant une ouverture 3 dans laquelle le plot 1 est destiné à être engagé.

Dans cet exemple, le plot 1 porte un fil métallique 4 dont une partie est engagée axialement dans le caoutchouc du plot 1.

Ce fil métallique 4 est soudé à un support 5 renfermant un dispositif électronique de commande du système « Stop and Start » (arrêt et démarrage) d'un véhicule automobile.

La pièce en métal 2 et le support 5 sont par exemple situés sous une aile avant du véhicule.

Le plot en caoutchouc 1 a pour fonction de filtrer les vibrations et d'éviter que celles-ci soient transmises au dispositif électronique contenu dans le support 5.

Les figures 1 à 3 montrent que l'une des extrémités du plot 1 comporte une partie pointue 6 pour faciliter l'engagement du plot 1 dans l'ouverture 3 de la pièce 2, comme montré par la flèche de la figure 2.

L'autre extrémité du plot 1 comporte un épaulement annulaire 7 destiné à venir s'appuyer autour de l'ouverture 3 de la pièce en métal 2, comme montré sur la figure 3.

Après montage du plot 1 dans l'ouverture 3 de la pièce 2, l'ensemble plot 1, fil 4 et support 5 est maintenu en position grâce à des vis de fixation non représentées.

La partie cylindrique du plot 1 présente deux nervures annulaires 8, 9 qui, lors du montage, servent à obtenir une certaine adhérence entre le plot 1 et l'ouverture 3 de la pièce 2 et qui rendent difficile l'engagement du plot 1 dans l'ouverture 3.

Pour remédier à cet inconvénient, les monteurs appliquent un lubrifiant sur le plot 1 avant de l'engager dans l'ouverture 3.

Cependant, ce lubrifiant, en supprimant la fonction d'adhérence réalisée par les nervures 8, 9, a pour conséquence que l'ensemble plot 1, fil 4 et support 5 risque de tomber, avant que cet ensemble soit maintenu en position par les vis de fixation.

Le but de la présente invention est de remédier aux inconvénients ci-dessus.

Ce but est atteint, selon l'invention, grâce à un plot en matière souple destiné à être fixé dans une ouverture réalisée dans une pièce rigide, l'une des extrémités de ce plot comportant une partie pointue et l'autre extrémité de ce plot comportant un épaulement annulaire destiné à venir s'appuyer autour de l'ouverture de la pièce rigide, caractérisé en ce que la partie pointue du plot porte une pièce en matière plastique présentant deux ailes flexibles s'étendant de chaque côté de la partie pointue, symétriquement par rapport à l'axe du plot, ces deux ailes étant distantes l'une de l'autre, de telle sorte qu'elles puissent fléchir chacune vers ladite partie pointue, lors de leur engagement dans l'ouverture, puis s'écarter l'une de l'autre après leur passage dans cette ouverture pour venir en prise avec le bord de cette dernière.

Les deux ailes flexibles de la pièce en matière plastique portée par la partie pointue du plot facilitent le montage, sans lubrifiant, du plot dans l'ouverture de la pièce rigide.

De plus, après leur engagement dans cette ouverture, les ailes flexibles ci-dessus s'écartent et viennent en prise avec le bord de l'ouverture, ce qui permet un pré-maintien du plot par rapport à l'ouverture.

Ainsi, le plot ne risque pas de se dégager de l'ouverture avant sa fixation définitive.

De préférence, ladite pièce en matière plastique est liée par surmoulage à la partie pointue du plot.

Ce surmoulage permet d'obtenir de façon économique une liaison fiable entre la pièce en matière plastique et le plot en matière souple, telle que du caoutchouc.

De préférence également, ladite pièce en matière plastique comporte une partie centrale sensiblement cylindrique qui est liée axialement à la partie pointue du plot.

Dans un mode de réalisation préféré de l'invention, les deux ailes de la pièce en matière plastique sont espacées chacune de la surface latérale de la partie pointue, selon un jeu qui est sensiblement constant sur toute la longueur de chacune des ailes.

Ce jeu constant permet aux deux ailes de fléchir vers la surface latérale de la partie pointue du plot lors de leur engagement dans l'ouverture de la pièce rigide.

Dans un mode de réalisation particulièrement avantageux, l'extrémité libre de chacune des ailes de la pièce en matière plastique comporte un épaulement pouvant s'appuyer contre le bord de l'ouverture, après le passage desdites ailes dans l'ouverture de la pièce rigide.

Cette particularité permet d'obtenir un pré-maintien très efficace du plot dans l'ouverture de la pièce rigide.

De préférence également, les extrémités des deux ailes opposées à leurs extrémités libres sont reliées l'une à l'autre par une surface courbe.

Cette surface courbe facilite l'engagement des deux ailes dans l'ouverture de la pièce rigide.

Selon une autre particularité avantageuse de l'invention, la partie du pot située entre la partie pointue et l'épaulement annulaire présente une surface extérieure cylindrique et lisse.

Cette surface cylindrique lisse facilite l'engagement du plot dans l'ouverture de la pièce rigide.

Dans une application préférée de l'invention, le plot porte un fil métallique qui est engagé dans la matière souple du plot, ce fil étant relié à un support.

Ce support peut être le support d'un composant pour véhicule automobile et ladite pièce rigide est une pièce en métal d'un véhicule automobile.

D'autres particularités et avantages de l'invention apparaîtront encore tout au long de la description ci-après.

Aux dessins annexés, donnés à titre d'exemples, non limitatifs :
- la figure 4 est une vue en perspective d'un plot selon l'invention,
- la figure 5 est une vue en coupe transversale de l'ouverture d'une pièce rigide et du plot selon l'invention montrant une première phase de montage de ce plot,
- la figure 6 est une vue analogue à la figure 5 montrant une deuxième phase de montage et le pré-maintien assuré par les deux ailes du plot,
- la figure 7 est une vue analogue à la figure 6 montrant l'engagement complet du plot dans l'ouverture de la pièce rigide.

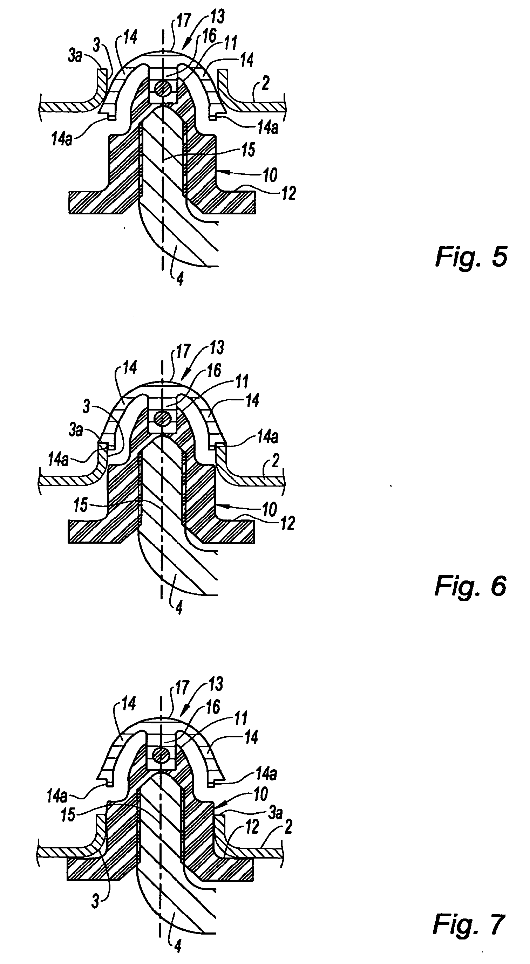

La figure 4 représente un pot 10 qui est, comme celui représenté sur les figures 1 à 3, destiné à être fixé dans l'ouverture 3 d'une pièce rigide 2, comme montré par les figures 5 à 7.

Comme dans le cas du plot montré sur les figures 1 à 3, le plot 10 porte un fil métallique 4 (voir figures 5 à 7) relié à un support contenant un composant électronique tel que celui d'un système « Stop and Start » de véhicule automobile.

Par ailleurs, comme dans le cas du plot représenté sur les figures 1 à 3, le plot 10 comporte à l'une de ses extrémités une partie pointue 11 et à son autre extrémité un épaulement annulaire 12 destiné à venir s'appuyer (voir figure 7) autour de l'ouverture 3 de la pièce rigide 2.

Conformément à l'invention, la partie pointue 11 du plot 10 porte une pièce en matière plastique 13 présentant deux ailes flexibles 14 s'étendant de chaque côté de la partie pointue 11, symétriquement par rapport à l'axe 15 du plot 10.

Les deux ailes 14 sont distantes l'une de l'autre, de telle sorte qu'elles puissent fléchir chacune vers la partie pointue 11, lors de leur engagement dans l'ouverture 3 (voir figure 5) puis s'écarter l'une de l'autre après leur passage dans cette ouverture 3 pour venir en prise, c'est-à-dire s'encliqueter sur le bord 3a de cette dernière, comme montré par la figure 6.

La pièce en matière plastique 13 est liée par surmoulage à la partie pointue 11 du plot 10.

Cette pièce en matière plastique 13 comporte une partie centrale 16 sensiblement cylindrique qui est liée axialement à la partie pointue 11 du plot 10.

Les figures 5 à 7 montrent également que les deux ailes 14 de la pièce 13 sont espacées chacune de la surface latérale de la partie pointue 11 selon un jeu qui est sensiblement constant sur toute la longueur de chacune des ailes 14.

Par ailleurs, l'extrémité libre de chacune des ailes 14 de la pièce en matière plastique 13 comporte un épaulement 14a pouvant venir s'encliqueter sur le bord 3a de l'ouverture 3, après le passage des ailes 14 dans l'ouverture 3 de la pièce rigide 2, comme indiqué sur la figure 6.

En outre, les extrémités des deux ailes 14 opposées à leurs extrémités libres sont reliées l'une à l'autre par une partie courbe 17.

De plus, la partie du plot 10 située entre la partie pointue 11 et l'épaulement annulaire 12 présente une surface extérieure cylindrique et lisse, c'est-à-dire dépourvue de nervures ou autres reliefs.

Pour monter le plot 10 dans l'ouverture 3 de la pièce 2, on procède comme suit.

Dans une première phase (voir figure 5), on présente la pièce en matière plastique 13 en regard de l'ouverture 3 et on pousse le plot 10 vers l'ouverture 3, ce qui provoque la flexion des deux ailes 14 vers la partie pointue 11 du plot 10.

Après leur passage dans l'ouverture 3 (voir figure 6) du fait de leur élasticité, les deux ailes 14 reviennent à leur position initiale et les épaulements 14a présents aux extrémités libres des deux ailes 14 viennent en prise avec le bord 3a de l'ouverture 3.

Dans cette position, les deux ailes 14 assurent un pré-maintien du plot 10 dans l'ouverture 3 de la pièce 2.

Malgré la masse de l'ensemble plot 10, fil 4 et support relié au fil 4, le plot 10 ne risque pas de se dégager de l'ouverture 3, car cet ensemble est suspendu au bord 3a de l'ouverture 2.

Le monteur peut ensuite engager complètement le plot 10 dans l'ouverture 3, comme montré sur la figure 7, jusqu'à ce que l'épaulement 12 du plot s'appuie contre la pièce 2.

Cette opération est réalisée lors du vissage qui permet de fixer définitivement l'ensemble ci-dessus à la pièce rigide 2.

L'invention apporte ainsi une solution simple, efficace et peu coûteuse aux difficultés rencontrées lors du montage du plot représenté sur les figures 1 à 3.

## Revendications

1. Plot (10) en matière souple destiné à être fixé dans une ouverture (3) réalisée dans une pièce rigide (2), l'une des extrémités de ce plot (10) comportant une partie pointue (11) et l'autre extrémité de ce plot (10) comportant un épaulement annulaire (12) destiné à venir s'appuyer autour de l'ouverture (3) de la pièce rigide (2), **caractérisé en ce que** la partie pointue (11) du plot (10) porte une pièce en matière plastique (13) présentant deux ailes flexibles (14) s'étendant de chaque côté de la partie pointue (11), symétriquement par rapport à l'axe (15) du plot, ces deux ailes (14) étant distantes l'une de l'autre, de telle sorte qu'elles puissent fléchir chacune vers ladite partie pointue (11), lors de leur engagement dans l'ouverture (3), puis s'écarter l'une de l'autre après leur passage dans cette ouverture (3) pour venir en prise avec le bord (3a) de cette dernière.

2. Plot selon la revendication 1, **caractérisé en ce que** ladite pièce en matière plastique (13) est liée par surmoulage à la partie pointue (11) du plot (10).

3. Plot selon l'une des revendications 1 ou 2, **caractérisé en ce que** ladite pièce en matière plastique (13) comporte une partie centrale (16) sensiblement cylindrique qui est liée axialement à la partie pointue (11) du plot (10).

4. Plot selon l'une des revendications 1 à 3, **caractérisé en ce que** les deux ailes (14) sont espacées chacune de la surface latérale de la partie pointue (11), selon un jeu qui est sensiblement constant sur toute la longueur de chacune des ailes (14).

5. Plot selon l'une des revendications 1 à 4, **caractérisé en ce que** l'extrémité libre de chacune des ailes (14) de la pièce en matière plastique (13) comporte un épaulement (14a) pouvant s'appuyer contre le bord (3a) de l'ouverture (3), après le passage desdites ailes (14) dans l'ouverture (3) de la pièce rigide (2).

6. Plot selon l'une des revendications 1 à 5, **caractérisé en ce que** les extrémités des deux ailes (14) opposées à leurs extrémités libres sont reliées l'une à l'autre par une surface courbe (17).

7. Plot selon l'une des revendications 1 à 6, **caractérisé en ce que** la partie du plot (10) située entre la partie pointue (11) et l'épaulement annulaire (12) présente une surface extérieure cylindrique et lisse.

8. Plot selon l'une des revendications 1 à 7, **caractérisé en ce qu'**il porte un fil métallique (4) qui est engagé dans la matière souple du plot (10), ce fil (4) étant relié à un support (5).

9. Plot selon la revendication 8, **caractérisé en ce que** ledit support (5) est le support d'un composant pour véhicule automobile et ladite pièce rigide (2) est une pièce en métal d'un véhicule automobile.

## Patentansprüche

1. Stopfen (10) aus einem anpassungsfähigen Material, der dazu bestimmt ist, in einer Öffnung (3) fixiert zu werden, die in einem starren Teil (2) ausgeführt ist, wobei eines der Enden dieses Stopfens (10) einen zugespitzten Abschnitt (11) umfasst, und das andere Ende dieses Stopfens (10) einen ringförmigen Bund (12) umfasst, der dazu bestimmt ist, sich um die Öffnung (3) des starren Teiles (2) herum anzulegen, **dadurch gekennzeichnet, dass** der zugespitzte Abschnitt (11) des Stopfens (10) ein Teil aus Kunststoffmaterial (13) trägt, das zwei flexible Flügel (14) aufweist, die sich auf jeder Seite des zugespitzten Abschnitts (11) symmetrisch im Verhältnis zur Achse (15) des Stopfens erstrecken, wobei sich diese beiden Flügel (14) im Abstand zueinander befinden, sodass sie sich bei ihrem Einführen in die Öffnung (3) jeweils zum besagten zugespitzten Abschnitt (11) biegen, und sich danach, nach der Durchführung durch diese Öffnung (3) voneinander entfernen können, um mit dem Rand (3a) von letzterer in Eingriff zu gelangen.

2. Stopfen nach Anspruch 1, **dadurch gekennzeichnet, dass** das besagte Teil aus Kunststoffmaterial (13) durch Überformung mit dem zugespitzten Abschnitt (11) des Stopfens (10) verbunden ist.

3. Stopfen nach einem der Ansprüche 1 oder 2, **dadurch gekennzeichnet, dass** das besagte Teil aus Kunststoffmaterial (13) einen zentralen in etwa zylindrischen Abschnitt (16) umfasst, der axial mit dem zugespitzten Abschnitt (11) des Stopfens (10) verbunden ist.

4. Stopfen nach einem der Ansprüche 1 bis 3, **dadurch gekennzeichnet, dass** die beiden Flügel (14) jeweils gemäß einem Spiel in einem Abstand von der Seitenfläche des zugespitzten Abschnitts (11) stehen das in etwa über die gesamte Länge eines jeden der Flügel (14) hinweg konstant ist.

5. Stopfen nach einem der Ansprüche 1 bis 4, **dadurch gekennzeichnet, dass** das freie Ende eines jeden der Flügel (14) des Teils aus Kunststoffmaterial (13) einen Bund (14a) umfasst, der sich nach der Durchführung der besagten Flügel (14) durch die Öffnung (3) des starren Teils (2) an den Rand (3a) der Öffnung (3) anlegen kann.

6. Stopfen nach einem der Ansprüche 1 bis 5, **dadurch gekennzeichnet, dass** die ihren freien Enden gegenüber liegenden Enden der beiden Flügel (14) durch eine gekrümmte Fläche (17) miteinander verbunden sind.

7. Stopfen nach einem der Ansprüche 1 bis 6, **dadurch gekennzeichnet, dass** jener Abschnitt des Stopfens (10), der sich zwischen dem zugespitzten Abschnitt (11) und dem ringförmigen Bund (12) befindet, eine zylindrische und glatte Außenfläche aufweist.

8. Stopfen nach einem der Ansprüche 1 bis 7, **dadurch gekennzeichnet, dass** er einen Metalldraht (4) trägt, der in das anpassungsfähige Material des Stopfens (10) eingeführt ist, wobei dieser Draht (4) mit einer Halterung (5) verbunden ist.

9. Stopfen nach Anspruch 8, **dadurch gekennzeichnet, dass** die besagte Halterung (5) die Halterung eines Bauteils für ein Kraftfahrzeug ist, und das besagte starre Teil (2) ein Metallteil eines Kraftfahrzeugs ist.

## Claims

1. Contact pad (10) in flexible material intended to be fixed in an opening (3) provided for this purpose in a rigid part (2), one end of this contact pad (10) having a tip (11) and the other end of the contact pad (10) having an annular shoulder (12) designed for support around the opening (3) of the rigid part (2), **characterised in that** the tip portion (11) of the contact pad (10) has a plastic part (13) with two flexible wings (14) extending from each side of the tip (11), symmetrical to the axis (15) of the contact pad, these two wings (14) being distanced from each other in such a manner that they can bend towards the aforementioned tip (11), after being pushed into the opening (3), then open out after passing through the opening (3) to make contact with the edge (3a) of the opening.

2. Contact pad according to claim 1, **characterised in that** said plastic part (13) is connected via over-moulding to the tip (11) of the contact pad (10).

3. Contact pad according to one of claim 1 or 2, **characterised in that** the said plastic part (13) comprises a central part (16) essentially cylindrical which is connected axially to the tip (11) of the contact pad (10).

4. Contact pad according to one of claims 1 to 3, **characterised in that** the two wings (14) are each spaced from the side surface of the tip (11), with play that is substantially constant throughout the entire length of each of the wings (14).

5. Contact pad according to one of claims 1 to 4, **characterised in that** the free end of each of the wings (14) of the plastic part (13) includes a shoulder (14a) able to rest against the edge (3a) of the opening (3), after passage of the said wings (14) through the opening (3) of the rigid part (2).

6. Contact pad according to one of the claims 1 to 5, **characterised in that** the ends of the two wings (14) opposite to the free end are connected to one another by a curved surface (17).

7. Contact pad according to one of claims 1 to 6, **characterised in that** the part of the contact pad (10) situated between the tip (11) and the annular shoulder (12) has a smooth cylindrical external surface.

8. Contact pad according to one of claims 1 to 7, **characterised in that** it carries a metal wire (4) which is embedded in the flexible contact pad (10) material, this wire (4) being itself connected to a support (5).

9. Contact pad, according to claim 8, **characterised in that** the said support (5) is the support for a motor vehicle component and the said rigid part (2) is a metal part of the motor vehicle.
